# EUROPÄISCHE PATENTSCHRIFT

(11) **EP 2 486 162 B1**
(45) Veröffentlichungstag und Bekanntmachung des Hinweises auf die Patenterteilung: **17.07.2013**
(21) Anmeldenummer: 10759585.2
(22) Anmeldetag: 22.09.2010
(51) Int. Cl.: C22C 37/04, C21D 1/18, F16C 3/06

(54) **BAINITISCHES GUSSEISEN MIT KUGELGRAPHIT UND HERSTELLUNGSVERFAHREN ZUR BILDUNG DES ZWISCHENGEFÜGES**
AUSFERRITIC NODULAR CAST IRON AND METHOD OF AUSTEMPERING
FONTE DUCTILE AYANT SUBIE UNE TREMPE ÉTAGÉE BAINITIQUE, PROCÉDÉ DE PRODUCTION DE CETTE FONTE ET COMPOSANT COMPRENANT CETTE FONTE

(30) Priorität: 05.10.2009 DE 102009048273
(43) Veröffentlichungstag der Anmeldung: 15.08.2012
(73) Patentinhaber: Bayerische Motoren Werke AG, 80809 München (DE); Neue Halberg Guss GmbH, 66130 Saarbrücken (DE)
(72) Erfinder: HUBER, Markus, 80801 München (DE); MITTRACH, Juergen, 85622 Feldkirchen (DE); SUESS, Petra, 81247 München (DE); RADEBACH, Dirk, 42899 Remscheid (DE)
(74) Vertreter: Bockhorni & Kollegen
(86) Internationale Anmeldenummer: PCT/EP2010/005811
(87) Internationale Veröffentlichungsnummer: WO 2011/042123

(56) Entgegenhaltungen:
- EP-A2- 0 144 907
- WO-A1-2008/076067
- US-A1- 2004 112 479
- "Austempered ductile-iron castings - advantages, production, properties and specifications" MATERIALS AND DESIGN, LONDON, GB LNKD- DOI:10.1016/0261-3069(92)90191-J, Bd. 13, Nr. 5, 1. Januar 1992 (1992-01-01) , Seiten 285-297, XP024153210 ISSN: 0261-3069 [gefunden am 1992-01-01]
- YANG J ET AL: "Effect of microstructure on abrasion wear behavior of austempered ductile cast iron (ADI) processed by a novel two-step austempering process" MATERIALS SCIENCE AND ENGINEERING A: STRUCTURAL MATERIALS:PROPERTIES, MICROSTRUCTURE & PROCESSING, LAUSANNE, CH LNKD- DOI:10.1016/J.MSEA.2005.06.036, Bd. 406, Nr. 1-2, 15. Oktober 2005 (2005-10-15), Seiten 217-228, XP025303752 ISSN: 0921-5093 [gefunden am 2005-10-15]

## Beschreibung

Die vorliegende Erfindung bezieht sich auf ein Gusseisen-Gussteil, insbesondere eine Kurbelwelle, und ein Verfahren zu dessen Herstellung.

Kurbelwellen werden nach der Norm EN 1563 aus Gusseisen mit Kugelgraphit nach der Norm EN-GJS 700 oder EN-GJS 800 ausgeführt, wobei der Werkstoff EN-GJS 700 eine Zugfestigkeit von mindestens 700 MPa und der Werkstoff EN-GJS 800 von mindestens 800 MPa aufweist.

Aus Gründen der Verbrauchsreduzierung werden die Zünddrücke im Motor durch Turboaufladung erhöht, und, um weitere Verbrauchsreduzierungen zu erreichen, werden die Gleitlagerdurchmesser von Kurbelwellen nach Möglichkeit minimiert. Daraus resultiert eine sich stetig erhöhende Belastung der Kurbelwelle.

Aufgrund gestiegener Beanspruchung werden Kurbelwellen häufig aus Schmiedestahl ausgeführt, da Stahlkurbelwellen höher belastbar sind als Kurbelwellen aus Gusseisen mit Kugelgraphit. Stahlwerkstoffe haben eine höhere Dichte als Gusswerkstoffe, wodurch das Gesamtmotorgewicht erhöht wird. Ein zusätzlicher Nachteil beim Einsetzen von Stahlkurbelwellen ist die Erhöhung der bewegten Massen. Beide Effekte führen zu einer Verbrauchserhöhung des Kraftfahrzeugs. Weiterhin sind Stahlkurbelwellen in der Regel teurer als Gusskurbelwellen. Auch bei der Optimierung des Massenausgieichs im Hinblick auf Verbrauchspotential, Akustik und Bauraum hat eine geschmiedete Stahlkurbelwelle gegenüber einer gegossenen Kurbelwelle den Nachteil, dass Hohlräume zur Gewichtsreduzierung nicht vorgegossen werden können, eine Gewichtsreduzierung also z.B. durch Bohren mit hohen Kosten dargestellt werden muss.

Ferner ist bekannt, Kurbelwellen aus ADI (Austempered Ductile Iron) herzustellen, welches ein ausferritisches Gefüge, d.h. sowohl ein austennitisches als auch ein ferritisches Gefüge aufweist, z.B. aus 'Aus tempered ductile-iron castings-advantages, production, properties and specifications,

Materials and Design, LONDON, GB, 1992, Vol.13, No.5, Seiten 285 bis 297.

Dazu wird das Gussteil aus Gusseisen mit Kugelgraphit mehrere Stunden auf aus Austenitisierungstemperatur erwärmt und dann auf ca. 350 °C abgeschreckt, wodurch sich bei dieser Temperatur das Ausferrit-Gefüge einstellt.

Kurbelwellen aus ADI weisen eine hohe Festigkeit, Zähigkeit und Verschleißbeständigkeit auf. Dickwandige Gussteile aus ADI, wie Kurbelwellen, setzten jedoch einen hohen Anteil an Nickel und andere kostspielige Legierungsbestandtelle, wie Molybdän, also aufwändige Gusslegierungen voraus.

Aufgabe der Erfindung ist es, ein Gusseisen-Gussteil, insbesondere eine Gusseisen-Kurbelwelle mit hoher Festigkeit, Zähigkeit und Verschleißbeständigkeit bereitzustellen, ohne die Herstellungskosten zu erhöhen.

Dies wird erfindungsgemäß durch das im Anspruch 1 gekennzeichnete Gussteil erreicht. In den Ansprüchen 2 bis 5 sind bevorzugte Ausgestaltungen des erfindungsgemäßen Gussteiles wiedergegeben. Der Anspruch 6 hat ein bevorzugtes Verfahren zur Herstellung des erfindungsgemäßen Gussteils zum Gegenstand.

Nach der Erfindung weist das Gusseisen-Gussteil ein Gefüge auf, das an der Gussteiloberfläche aus einer ersten Schicht aus Ausferrit, also einem Mischgefüge aus nadeligem Ferrit mit eingebetteten stabilisierten Restaustenit besteht.

Die Ausferrit-Schicht an der Gussteiloberfläche weist eine Zugfestigkeit (Rm) von mindestens 800 MPa, insbesondere mindestens 900 MPa auf. Die Dehngrenze (Rp 0,2) der Ausferrit-Schicht beträgt vorzugsweise mindestens 600 MPa insbesondere mindestens 650 MPa.

Auch kann die Zugfestigkeit 1000 MPa und mehr betragen, allerdings kann dann die Bearbeitung schwieriger werden. Die Schichtdicke der Ausferrit-Schicht an der Gusstelloberfläche beträgt vorzugsweise mindestens 2 mm, insbesondere mindestens 4 mm.

An die Ausferrit-Schicht an der Gussteiloberfläche, die die erste Schicht bildet, schließt sich zum Inneren des Gussteiles hin eine zweite Schicht an, die aus einem Mischgefüge aus Ausferrit, also Ferrit und Austenit, sowie Troostit besteht.

Troostit ist ein feinstreifiger Perlit. Er liegt in rosettenförmiger Form vor. Die feinen Lamellen des Perlits sind lichtmikroskopisch nur bei sehr hoher Vergrößerung zu erkennen. So bilden die Lamellen des Troostits bei einer 200-fachen Vergrößerung lediglich schwarze Flecken, d.h. die einzelnen Lamellen sind so fein, dass sie bei dieser Vergrößerung noch nicht erkennbar sind.

Durch die feine Struktur weist Troostit eine geringe innere Kerbwirkung auf. Damit kann mit Troostit eine hohe Dauerfestigkeit erzielt werden. Dies stellt für hochbeanspruchte Bauteile, wie Kurbelwellen, einen wesentlichen Vorteil dar.

Je nach Wandstärke des Gussteils kann das übrige Gefüge, also das sich an die zweite Schicht aus Ausferrit und Troostit anschließende Innere des Gussteils, aus Troostit und/oder einem Mischgefüge aus Troostit und relativ dazu gröberen Perlit bestehen. So liegt z.B. bei einem dicken Gussteil mit einer Wandstärke von z.B. mehr als 30 mm im Inneren des Gussteils normalerweise Troostit und/oder ein Mischgefüge aus Troostit und relativ dazu gröberer Perlit vor.

D.h. das erfindungsgemäße Gussteil besteht aus einem Gradientenwerkstoff, der sich aus der ersten Schicht aus Ausferrit an der Gussteiloberfläche, der zweiten Schicht aus dem Mischgefüge aus Ausferrit und Troostit und ggf. Troostit und/oder ein Mischgefüge aus Trosstit und relativ dazu gröberer Perlit im Inneren zusammensetzt.

Falls das erfindungsgemäße Gussteil aus Gusseisen mit Kugelgraphit (GJS) als Basismaterial herstellt worden ist, weist es zudem in den beiden Schichten und, falls vorhanden, auch der Troostit bzw. der relativ dazu gröbere Perlit im Inneren des Gussteils Graphit in Kugelform auf. Die Graphitkugeln sind dabei gleichmäßig verteilt, wobei das Minimum vorzugsweise bei 100 Graphitkugeln pro mm² und maximal bei 0,5 %, bezogen auf die Querschnlttsfläche, liegt.

Durch den Kugelgraphit wird die Dichte des Werkstoffs gegenüber einem Stahlwerkstoff gesenkt, sodass das erfindungsgemäße Gussteil, also insbesondere die erfindungsgemäße Kurbelwelle leichter ist als eine Schmiedestahlwelle mit gleichem Volumen. Darüberhinaus führen Hohlräume, die die unterschiedlichsten Ausgestaltungen aufweisen können, in dem erfindungsgemäßen Gussteil, insbesondere der erfindungsgemäßen Kurbelwelle zu einer wesentlichen Gewichtsreduktion.

Das Gusseisen, aus dem das erfindungsgemäße Gussteil hergestellt wird, weist folgende chemische Zusammensetzung auf:
3,2 bis 3,9 Gew.-% Kohlenstoff
2,0 bis 2,4 Gew.-% Silizium
0,6 bis 1,3 Gew.-% Mangan
0,6 bis 1,0 Gew.-% Kupfer
0,030 bis 0,050 Gew.-% Magnesium
0,0 bis 0,1 Gew.-% Zinn
0,0 bis 0,5 Gew.-% Nickel
Rest Eisen und übliche Verunreinigungen.

Das heißt das Gusseisen, aus dem, das erfindungsgemäß Gussteil besteht, weist kein Molybdän und kein oder lediglich eine geringfügige Menge Nickel auf. Damit ist das Gusseisen für die Herstellung des erfindungsgemäßen Gussteils mit geringen Kosten verbunden.

Das erfindungsgemäße Gussteil wird aus Gusseisen mit der vorstehend angegebenen chemischen Zusammensetzung gegossen. Nach dem Gießen und ggf. einer mechanischen Bearbeitung auf Maß erfolgt eine zweistufige Wärmebehandlung.

Dazu wird das Gussteil in einem Ofen unter Schutzatmosphäre auf eine Austenitisierungstemperatur von 910 bis 950 °C, insbesondere ca. 920 °C erwärmt und bei dieser Temperatur mindestens eine Stunde, vorzugsweise mindestens 2 Stunden gehalten. Anschließend wird das Gussteit in einem Medium mit einer Temperatur von 300 bis 400 °C, insbesondere ca. 360 °C abgekühlt. Als Abkühlmedium kann ein Salzbad verwendet werden. Die Haltezeit im Abkühlmedium beträgt mindestens eine Stunde, vorzugsweise mindestens 2 Stunden.

Dabei wandelt sich der Austenit an der Oberfläche des Gussteils in eine Schicht aus Ausferrit um, also in ein Mischgefüge aus Ferrit und Restaustenit.

Während die Schicht an der Oberfläche des Gussteils beim Überführen in das Abkühlmedium von der Austenitisierungstemperatur schnell abkühlt und damit abgeschreckt wird, um an der Oberfläche Ausferrit zu bilden, liegen zum Inneren des Gussteils hin andere Abkühlbedingungen vor, die zur Bildung der zweiten Schicht, also zur Umwandlung des Austenit in Ausferrit und Troostit, und bei Gussteilen mit großer Wandstärke zur Umwandlung des Austenits in ein sich an die zweite Schicht zum Inneren des Gussteiles hin anschließendes Gefüge aus Troostit und/oder einem Mischgefüge aus Troostit und relativ dazu gröberen Perlit führen.

Das erfindungsgemäße Gussteil ist vorzugsweise eine Kurbelwelle für Verbrennungsmotoren. Es kann jedoch beispielsweise auch ein Zahnrad, ein Presswerkzeug, eine Laufrolle oder ein anderes hochbeanspruchtes Gussteil sein.

Nachstehend ist die Erfindung anhand der beigefügten Zeichnung am Beispiel einer Kurbelwelle näher beschrieben. Darin zeigen jeweils schematisch:
Figur 1 im Schnitt einen Teil einer Kurbelwelle; und
Figur 2 eine vergrößerte Darstellung des Bereichs A in Figur 1.

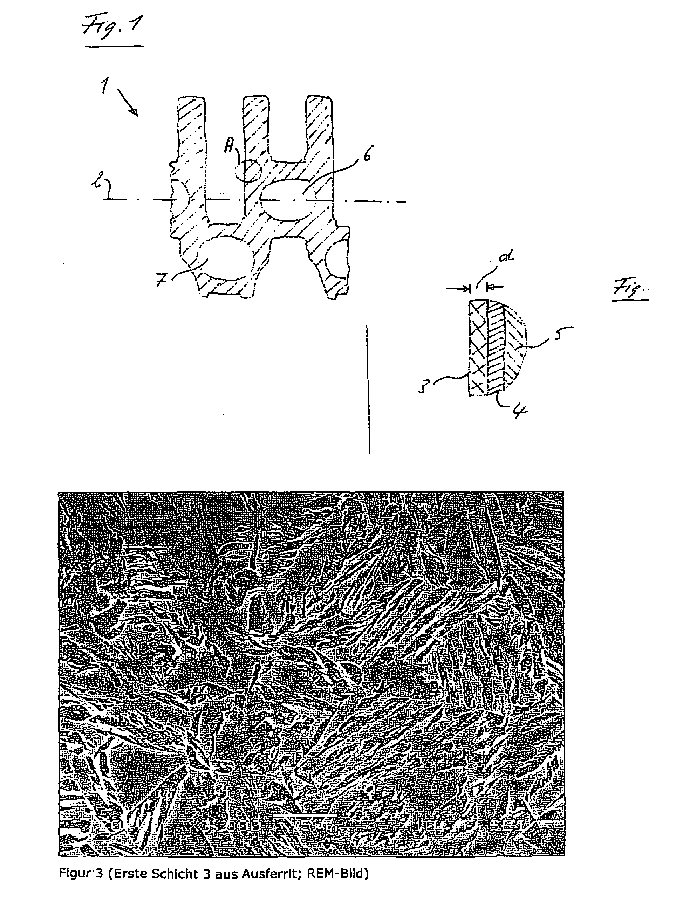

Gemäß Figur 1 und 2 weist eine Kurbelwelle 1 mit der Drehachse 2 eine erste Schicht 3 an der Oberfläche und eine zweite Schicht 4 zwischen der ersten Schicht 3 und dem Inneren 5 der Kurbelwelle 1 auf. Mit den Bezugsziffern "6" und "7" sind kavernenartige Hohlräume in der Kurbelwelle 1 bezeichnet.

Die erste Schicht 3 besteht aus Ausferrit und weist eine Schichtdicke d von beispielsweise 5 mm auf. Die zweite Schicht 4 besteht aus einem Mischgefüge aus Ausferrit und Troostit, während das Innere 5 durch Troostit und/oder einem Mischgefüge aus Troostit und relativ dazu gröberen Perlit gebildet wird.

Durch die Ausferrit-Schicht 3 weist die Kurbelwelle 1 insbesondere auch in dem hochbeanspruchten Übergangsbereich am Haupt- und Hublager, wo sie auf Biegung und Torsion beansprucht wird, eine hohe Festigkeit auf.

Das nachstehende Beispiel dient der weiteren Erläuterung der Erfindung.

### Beispiel:

Aus einem Gusseisen folgender Zusammensetzung wird eine Kurbelwelle gegossen:
Kohlenstoff 3, 5 Gew.%
Silizium 2, 2 Gew.-%
Mangan 0,9 Gew.-%
Kupfer 0,8 Gew.-%
Magnesium 0,04 Gew.-%
Zinn 0,05 Gew.-%
Nickel 0,2 Gew.-%

Die gegossene Kurbelwelle wird einer zweistufigen Wärmebehandlung unterworfen.

Dazu wird die Kurbelwelle in einem Ofen unter Schutzatmosphäre (z.B. Argon) auf eine Temperatur von 920 °C erwärmt und bei dieser Temperatur 150 Minuten gehalten. Anschließend wird das so austenitisierte Gussteil in einem Salzbad auf 360 °C abgeschreckt und darin 150 Minuten gehalten, wonach es auf Raumtemperatur abgekühlt wird.

Es wurden die Zugfestigkeit (Rm) und die Dehngrenze (Rm 0,2) z.B. nach DIN EN 10002 bestimmt. Die aus Ausferritschicht, also die Schicht 3 an der Oberfläche der Kurbelwelle 1 nach Figur 2 weist dabei eine Zugfestigkeit von 920 MPa und eine Dehngrenze von 660 MPa auf.

Darüberhinaus wurden Schliffbilder von der Ausferrit-Schicht, also der ersten Schicht 3 nach Figur 2, der zweiten Schicht 4 aus dem Mischgefüge aus Ausferrit und Troostit und dem Inneren 5 der Kurbelwelle aus Troostit und/oder einem Mischgefüge aus Troostit und relativ dazu gröberen Perlit (Mikroskop-Bild) angefertigt.

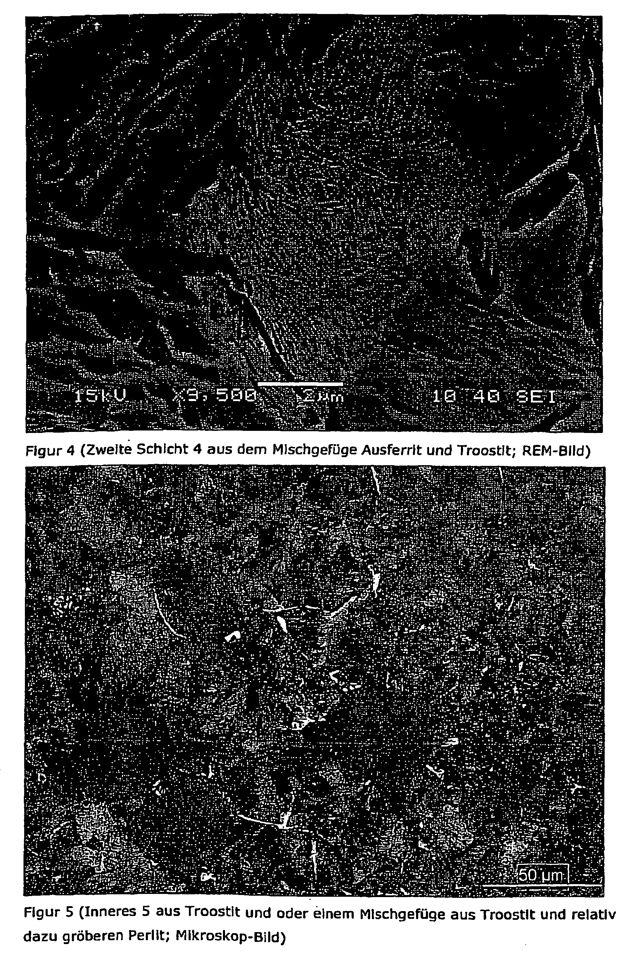

Das Schliffbild der ersten Schicht 3 aus Ausferrit ist in Figur 3, das Schliffbild der zweiten Schicht 4 aus dem Mischgefüge aus Ausferrit und Troostit in Figur 4 und das Schliffbild des Inneren 5 aus Troostit und/oder einem Mischgefüge aus Troostit und relativ dazu gröberen Perlit in Figur 5 dargestellt.

## Patentansprüche

1. Gusseisen-Gussteil, **gekennzeichnet durch** ein Gefüge, das an der Gussstückoberfläche eine erste Schicht (3) aus Ausferrit und eine sich zum Inneren (5) des Gussteils hin an die erste Schicht (3) anschließende zweite Schicht (4) aus Ausferrit und Troostit aufweist, wobei das Gusseisen 0,0 bis 0,5 Gew.-% Nickel und kein Molybdän aufweist.

2. Gusseisen-Gussteil nach Anspruch 1, **dadurch gekennzeichnet, dass** das Gefüge des sich an die zweite Schicht (4) anschließenden Inneren (5) des Gussteils aus Troostit und/oder einem Mischgefüge aus Troostit und relativ dazu gröberen Perlit besteht.

3. Gusseisen-Gussteil nach Anspruch 1 oder 2, **dadurch gekennzeichnet, dass** die erste Schicht (3) aus Ausferrit eine Zugfestigkeit (Rm) von mindestens 900 MPa und eine Dehngrenze (Rp 0,2) von mindestens 600 MPa aufweist.

4. Gusseisen-Gussteil nach einem der vorstehenden Ansprüche, **dadurch gekennzeichnet, dass** es Graphit in Kugelform enthält.

5. Gusseisen-Gussteil nach einem der vorstehenden Ansprüche, **dadurch gekennzeichnet, dass** das Gusseisen folgende Zusammensetzung aufweist:
3,2 bis 3,9 Gew.-% Kohlenstoff
2,0 bis 2,4 Gew.-% Silizium
0,6 bis 1,3 Gew.-% Mangan
0,6 bis 1,0 Gew.-% Kupfer
0,030 bis 0,050 Gew.-% Magnesium
0,0 bis 0,1 Gew.-% Zinn
0,0 bis 0,5 Gew.-% Nickel
Rest Eisen und übliche Verunreinigungen.

6. Verfahren zur Herstellung des Gusseisen-Gussteils nach einem der Ansprüche 1 bis 4, **dadurch gekennzeichnet, dass** ein Gusseisen mit Kugelgraphit (GJS) mit einer Zusammensetzung gemäß dem Anspruch 5 in einem Ofen auf eine Austenitisierungstemperatur von 910 bis 950 °C erwärmt und nach einer Haltezelt von mindestens 60 Minuten in einem Medium auf eine Temperatur von 300 bis 400 °C abgekühlt und nach einer Haltezeit von mindestens 60 Minuten in dem Abkühlmedium auf Raumtemperatur abgekühlt wird.

7. Gusseisen-Gussteil nach einem der Ansprüche 1 bis 5, **dadurch gekennzeichnet, dass** es durch eine Kurbelwelle (1) gebildet ist.

## Claims

1. A cast iron cast part comprising a structure including a first layer (3) made from ausferrite at a cast part surface and a second layer (4) made from ausferrite and troostite adjacent to the first layer (3) towards an interior (5) of the cast part whereas the cast iron contains 0.0 to 0.5 % nickel and no molybdenum.

2. The cast iron cast part, according to claim 1, wherein the structure of the interior (5) of the cast part adjacent to the second layer (4) is made from troostite and/or a mixed structure including troostite and perlite that is coarser than the troostite.

3. The cast iron cast part according to claim 1 or 2, wherein the first layer (3) made from ausferrite has a tensile strength (Rm) of at least 900 MPa and an elasticity limit (Rp 0.2) of at least 600 MPa.

4. The cast iron cast part according to one of the preceding claims, wherein the cast iron cast part includes spheroidal graphite.

5. The cast iron cast part according to one of the preceding claims, wherein the cast iron has the following composition:
3.2 to 3.9 % by weight carbon
2.0 to 2.4 % by weight silicon
0.6 to 1.3 % by weight manganese
0.6 to 1.0 % by weight copper
0.030 to 0.050 % by weight magnesium
0.0 to 0.1 % by weight tin
0.0 to 0.5 % by weight nickel
The rest includes iron and common impurities.

6. A method for producing a cast iron cast part according to one of the claims 1 through 4, wherein a cast iron with spheroidal graphite (GJS) with a composition according to claim 5 is heated in an oven to an austenizing temperature of 910° C to 950° C and after a dwelling time of at least 60 minutes is cooled in a medium to a temperature of 300° C to 400° C and after a dwelling time in the cooling medium of at least 60 minutes cooled to ambient temperature.

7. The cast iron cast part according to one of the claims 1 through 5, wherein the cast iron cast part is formed as a crankshaft (1).

## Revendications

1. Pièce moulée en fonte, **caractérisée par** une structure qui présente, à la surface de la pièce de fonderie, une première couche (3) en ausferrite et une deuxième couche (4) en ausferrite et en troostite qui se raccorde à la première couche (3) en direction de l'intérieur (5) de la pièce moulée, la fonte présentant 0,0 à 0,5 %-poids de nickel et ne présentant pas de molybdène.

2. Pièce moulée en fonte selon la revendication 1, **caractérisée en ce que** la structure de l'intérieur (5) de la pièce moulée se raccordant à la deuxième couche (4) est composée de troostite et/ou d'une structure mixte de troostite et de perlite relativement plus grossière par rapport à la troostite.

3. Pièce moulée en fonte selon la revendication 1 ou 2, **caractérisée en ce que** la première couche (3) en ausferrite présente une résistance à la traction (Rm) d'au moins 900 MPa et une limite d'allongement (Rp 0,2) d'au moins 600 MPa.

4. Pièce moulée en fonte selon une des revendications précédentes, **caractérisée en ce qu'**elle contient du graphite sous forme sphéroïdale.

5. Pièce moulée en fonte selon une des revendications précédentes, **caractérisée en ce que** la fonte présente la composition suivante :
3,2 à 3,9 % en poids de carbone
2,0 à 2,4 % en poids de silicium
0,6 à 1,3 % en poids de manganèse
0,6 à 1,0 % en poids de cuivre
0,030 à 0,050 % en poids de magnésium 0,0 à 0,1 % en poids d'étain
0,0 à 0,5 % en poids de nickel
Reste : fer et impuretés habituelles

6. Procédé de fabrication de la pièce moulée en fonte selon une des revendications 1 à 4, **caractérisé en ce qu'**une fonte avec du graphite sphéroïdal (GJS) ayant une composition selon la revendication 5 est chauffée dans un four à une température d'austénitisation de 910 à 950 °C et puis refroidie, après un temps de maintien d'au moins 60 minutes, dans un milieu à une température de 300 à 400 °C et puis refroidie à la température ambiante après un temps de maintien d'au moins 60 minutes dans le milieu de refroidissement.

7. Pièce moulée en fonte selon une des revendications 1 à 5, **caractérisée en ce qu'**elle est formée en un vilebrequin (1).
